(19) Europäisches Patentamt
European Patent Office
Office européen des brevets

(11) **EP 1 868 287 A2**

(12) **EUROPEAN PATENT APPLICATION**

(43) Date of publication:
**19.12.2007 Bulletin 2007/51**

(51) Int Cl.:
***H02P 6/22*** *(2006.01)*

(21) Application number: **07011404.6**

(22) Date of filing: **11.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **12.06.2006 JP 2006161896**

(71) Applicants:
• **Denso Corporation**
 **Kariya-city,**
 **Aichi-pref. 448-8661 (JP)**
• **NIPPON SOKEN, INC.**
 **Nishio-city,**
 **Aichi-pref. 445-0012 (JP)**

(72) Inventors:
• **Hori, Masashi**
 **Nishio-city,**
 **Aichi-pref. 445-0012 (JP)**

• **Kashiwagi, Tomoyuki**
 **Kariya-city,**
 **Aichi-pref. 448-8661 (JP)**
• **Matsuzaki, Haruki**
 **Kariya-city,**
 **Aichi-pref. 448-8661 (JP)**
• **Shinojima, Masaaki**
 **Kariya-city,**
 **Aichi-pref. 448-8661 (JP)**

(74) Representative: **Winter, Brandl, Fürniss, Hübner Röss, Kaiser,**
 **Polte Partnerschaft Patent- und Rechtsanwaltskanzlei**
 **Alois-Steinecker-Strasse 22**
 **85354 Freising (DE)**

(54) **Controller for ensuring start of operation of synchronous motor**

(57) A synchronous motor controller is provided which is designed to diagnose whether a failure is occurring or not in energizing one of phase windings of a synchronous motor which is required to be energized first to start the synchronous motor. When such a failure is found, the controller reverses the synchronous motor slightly to bring one of the phase windings which is possible to energize properly to a starting position where the energization of the phase windings is to be initiated to start the synchronous motor in a required direction, thereby ensuring the stability in starting the synchronous motor even if any of the phase windings is failing to be energized.

*FIG. 4*

## Description

The present application claims the benefit of Japanese Patent Application No. 2006-161896 filed on June 12, 2006, the disclosure of which is incorporated herein by reference.

BACKGROUND OF THE INVENTION

1 Technical Field of the Invention

The present invention relates generally to a synchronous motor controller designed to monitor an angular position of a rotor of a synchronous motor and switch phase windings of the motor in sequence between an energized state and a deenergized state, and more particularly to such a controller working to ensure the stability in starting the synchronous motor.

2 Background Art

Japanese Patent First Publication No. 2004-23890 teaches a synchronous motor control system which is equipped with an encoder working to output a sequence of pulse signals in synchronization with rotation of a rotor of a synchronous motor, monitors a count of the pulse signals to determine an angular position of the rotor, and switches phase windings of the synchronous motor in sequence between an energized state and a deenergized state to bring the angular position of the rotor into agreement with a target position in a feedback control mode.

The above system, however, has the problem in that a failure in energizing one of the phase windings which is required to be energized first to start the synchronous motor will result in a failure in starting the synchronous motor.

SUMMARY OF THE INVENTION

It is therefore a principal object of the invention to avoid the disadvantages of the prior art.

It is another object of the invention to provide a synchronous motor controller designed to ensure the stability in starting a synchronous motor in the event that a failure is occurring in energizing one of phase windings of the motor which is to be energized first to start the motor.

According to one aspect of the invention, there is provided a synchronous motor controller which may be employed in a gear shift mechanism which shifts the gear of an automatic transmission for automotive vehicles. The synchronous motor controller comprises: (a) an angular position sensor which measures an angular position of a rotor of a synchronous motor equipped with phase windings and outputs a signal indicative thereof; and (b) a controller which works to operate the synchronous motor selectively in a normal rotation control mode and a reverse rotation control mode. In the normal rotation control mode, the controller monitors the signal outputted from the angular position sensor and switches phase windings of the synchronous motor selectively in a first scheduled sequence between an energized state and a deenergized state to rotate the synchronous motor in a required direction until an angular position of the synchronous motor, as measured by the angular position sensor, reaches a required position. The controller also works to diagnose whether a failure is occurring in energizing one of the phase windings of the synchronous motor which is to be energized first when it is required to start the synchronous motor. When the failure is found as being occurring, the controller enters the reverse rotation control mode temporarily to switch the phase windings of the synchronous motor selectively between the energized state and the deenergized state in a second scheduled sequence reverse to the first scheduled sequence to rotate the synchronous motor in a direction reverse to the required direction and then enters the normal rotation control mode to bring the angular position of the synchronous motor into agreement with the required position.

Typical synchronous motors usually continue to rotate with the aid of inertia energy once having been started even if a failure is occurring in energizing any of phase windings of the synchronous motor, thus resulting in an instantaneous lack of torque output from the synchronous motor. Consequently, unless one of the phase windings which is required to be energized first to start the synchronous motor is failing to be energized, it is possible to start the synchronous motor properly. The synchronous motors are typically so designed that one of the phase windings which is to be energized first to start the synchronous motor in a normal direction is always different from that in a reverse direction as long as starting positions are the same. Accordingly, when it is impossible to start the synchronous motor in one of the normal and reverse direction in the presence of a failure in energizing any one of the phase windings, it is always possible start the synchronous motor in the other direction.

The synchronous motor controller is designed based on the fact as described above. Specifically, when the failure is found as being occurring in energizing one of the phase windings which is to be energized first to start the synchronous motor, the synchronous motor controller enters the reverse rotation control mode to rotate the synchronous motor slightly in a direction reverse to a required direction to ensure the energization of the phase windings required to start the synchronous motor in the required direction.

In the preferred mode of the invention, after entering the reverse rotation control mode, the controller selectively energizes the phase windings other than that found as being failing to be energized and last completes energization of one of the phase windings which is other than that found as being failing to be energized to complete the reverse rotation control mode.

A period of time for which the one of the phase windings is energized last upon completion of the reverse rotation control mode has a length required to hold the rotor at a given stop position.

BRIEF DESCRIPTION OF THE DRAWINGS

The present invention will be understood more fully from the detailed description given hereinbelow and from the accompanying drawings of the preferred embodiments of the invention, which, however, should not be taken to limit the invention to the specific embodiments but are for the purpose of explanation and understanding only.

In the drawings:

Fig. 1 is a perspective view which shows a gear shift mechanism working to shift a gear of an automatic transmission for automotive vehicles;

Fig. 2 is a block diagram which shows a circuit structure of a range shift controller according to the invention which is designed to control an operation of the gear shift mechanism of Fig. 1;

Fig. 3 is a view which shows an internal structure of a synchronous motor installed in the gear shift mechanism of Fig. 1;

Fig. 4 is a circuit diagram which shows internal structures of the synchronous motor and the gear shift controller illustrated in Figs. 1 and 2;

Fig. 5 is a time chart which shows a sequence of energizations of phase windings of the synchronous motor of Fig. 3;

Fig. 6 is a table listing sequences of energizations of phase windings of the synchronous motor of Fig. 3 in the presence of a failure in energizing one of the phase windings when a required direction in which the synchronous motor is to be started is a normal direction;

Fig. 7 is a table listing sequences of energizations of phase windings of the synchronous motor of Fig. 3 in the presence of a failure in energizing one of the phase windings when a required direction in which the synchronous motor is to be started is a reverse direction;

Fig. 8 is a flowchart of a start control program to be executed by the gear shift controller of Fig. 2 to control a starting operation of the synchronous motor of Fig. 3;

Fig. 9 is a flowchart of a diagnosis program to be executed by the gear shift controller of Fig. 2 to diagnose one of phase windings of the synchronous motor of Fig. 3 which is to be energized first to start the synchronous motor; and

Fig. 10 is a flowchart of a reverse rotation control program to be executed by the gear shift controller of Fig. 2 to control rotation of the synchronous motor when it is required to start the synchronous , motor in the presence of a failure in energizing one of phase windings of the motor which is to be energized first to start the motor.

DESCRIPTION OF THE PREFERRED EMBODIMENTS

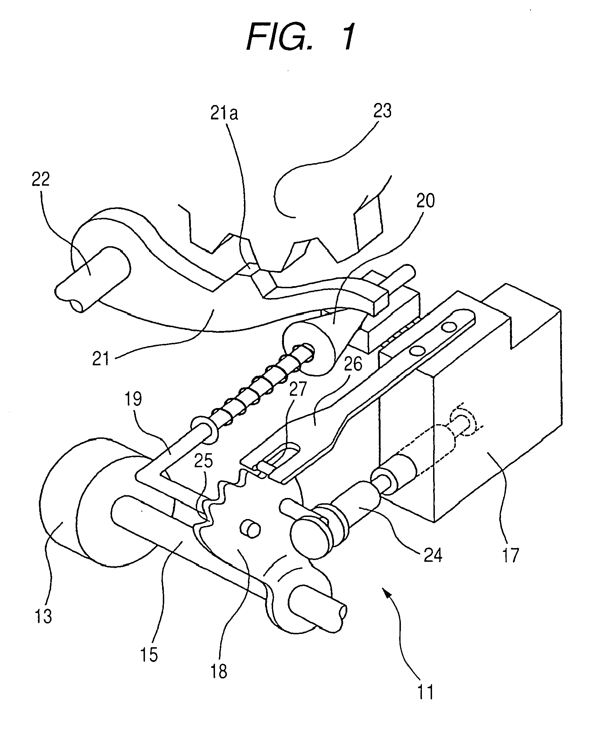

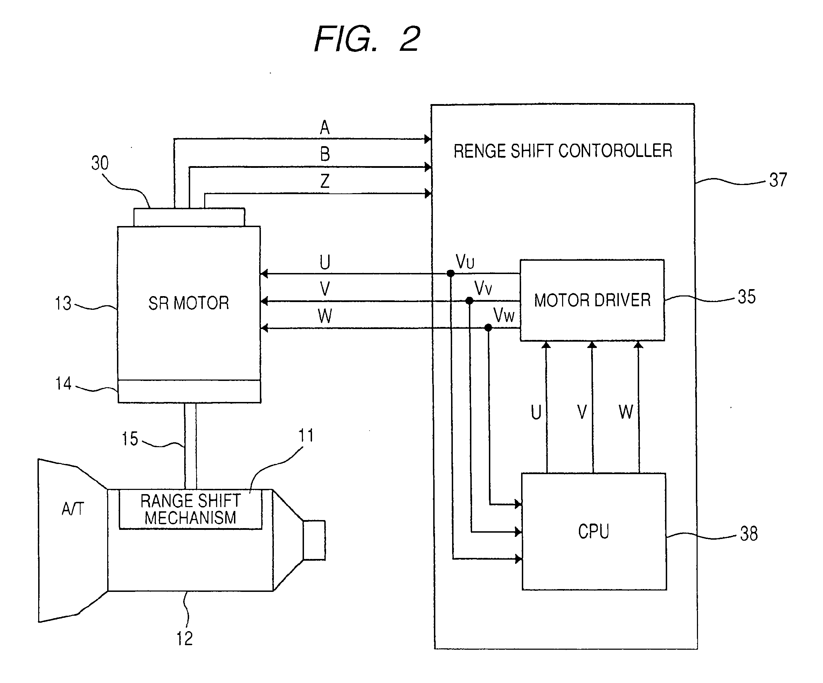

Referring to the drawings, wherein like reference numbers refer to like parts in several views, particularly to Figs. 1 and 2, there is shown a range shift controller 37 according to the invention which is designed to control an operation of a range shift mechanism 11 installed in an automatic transmission 12 for automotive vehicles.

The range shift mechanism 11 works to change the gear of the automatic transmission 12. The automatic transmission 12, as referred to therein, has a typical structure which is designed to be switchable in operation between four gear ranges: a parking (*P*) range, a reverse (*R*) range, a neutral (*N*) range, and a drive (*D*) range. The range shift mechanism 11 is used to shift the P, *R, N,* and D ranges of the automatic transmission 12 from one to another. The range shift mechanism 11 is driven by an electric motor 13. The synchronous motor 13 is made of a synchronous motor such as a switched reluctance motor (SRM) and has a speed reducing mechanism 14 installed therein, as shown in Fig. 2. The speed reducing mechanism 14 has an output shaft joined to the range shift mechanism 11 through an output shaft 15.

The output shaft 15, as clearly shown in Fig. 1, has secured thereon a detent lever 18 which changes a valve position of a manual valve 17 disposed in a hydraulic circuit of the automatic transmission 12. The detent lever 18 has jointed thereto an L-shaped parking rod 19 which has a conical head 20 in abutment with a lock lever 21. The lock lever 21 is shifted vertically, as viewed in the drawing, around a support shaft 22 as the conical head 20 is moved by a shifting motion of the parking rod 19, thereby locking or unlocking a parking gear 23. The parking gear 23 is joined to an output shaft of the automatic transmission 12. When the parking gear 23 is locked from rotating by the lock lever 21, it will cause driven wheels of the automotive vehicle to be placed in a parking mode.

The detent lever 18 has jointed thereto a spool valve 24 of the manual valve 17 through a pin. When the detent lever 18 is rotated by the synchronous motor 13 through the output shaft 15, it shifts the position of the spool valve 24 of the manual valve 17, thereby changing one of the P, R, *N,* and D ranges to another to shift the position of a hydraulic clutch installed in the automatic transmission 12 to a selected one.

The detent lever 18 has a waved end wall in which four recesses 25 are formed. The recesses 25 serve to hold the spool valve 24 at any one of four positions corresponding to the P, *R, N,* and D ranges of the automatic transmission 12, respectively. A detent spring 26 is firmly fixed on the manual valve 17. The detent spring 26 has affixed to the tip thereof a pin 27 which engages a selected one of the recesses 25 of the detent lever 18 to hold the detent lever 18 at a corresponding one of four angular positions thereof, thereby holding the spool valve 24 of the manual valve 17 at the position corresponding to a selected or target one of the P, R, *N,* and D ranges of the automatic transmission 12.

When it is required to establish the P range, the parking rod 19 is moved to the lock lever 21 and then lifts it up at a large-diameter portion of the conical head 20 to bring a protrusion 21a of the lock lever 21 into engagement with one of gear teeth of the parking gear 23 so that the parking gear 23 is locked. This causes the output shaft (i.e., a driving shaft) of the automatic transmission 12 to be locked and placed in the parking mode.

Alternatively, when it is required to establish the gear range other than P range, the parking rod 19 is moved away from the lock lever 21 to bring the conical head 20 into disengagement from the lock lever 21, so that the protrusion 21a leaves one of gear teeth of the parking gear 23. This causes the output shaft of the automatic transmission 12 to be unlocked and allowed to rotate to ensure the running of the vehicle.

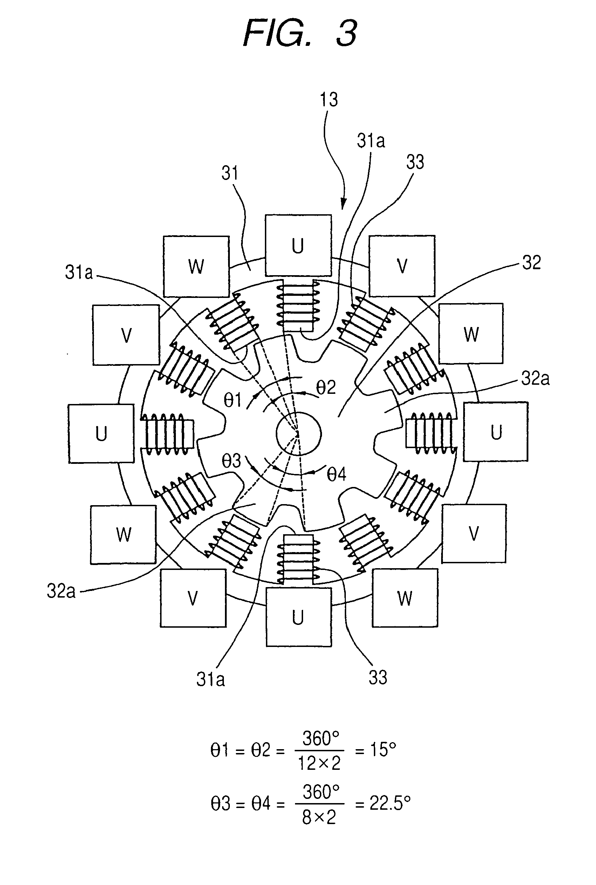

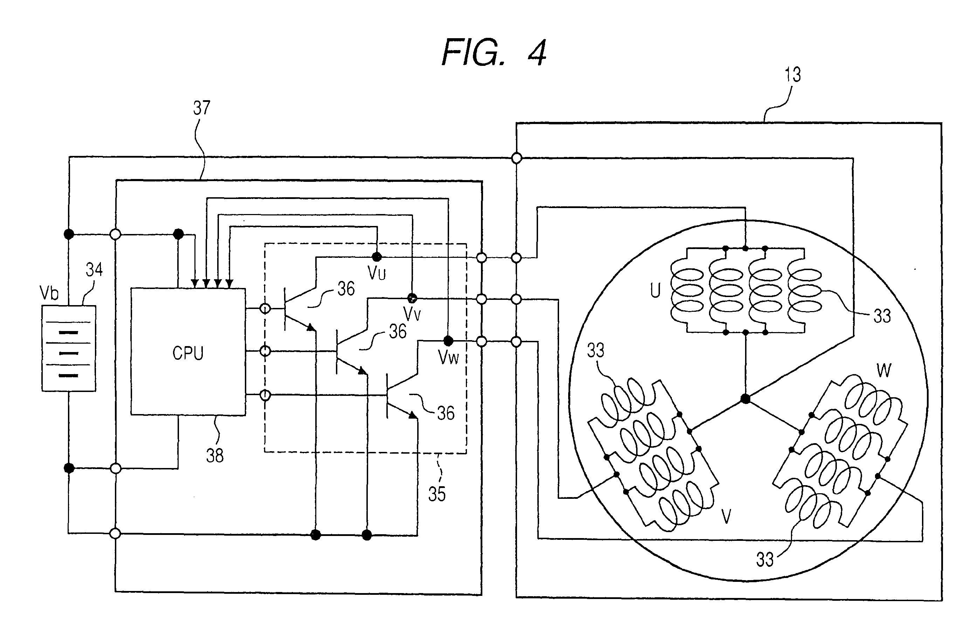

The structure of the synchronous motor 13 serving as a driving source for the range shift mechanism 11 will be described with reference to Figs. 3 and 4.

The synchronous motor 13 is implemented by a switched reluctance motor (SRM) with a stator 31 and a rotor 32 each having salient poles. This type of motor needs no permanent magnets and is advantageously simple in structure. Specifically, the cylindrical stator 31 has twelve salient poles 31a formed on an inner peripheral wall thereof at equi-intervals. The rotor 32 has eight salient poles 32a formed on an outer peripheral wall at equi-intervals, so that the rotation of the rotor 32 will cause the salient poles 32a to radially face the salient poles 31a of the stator 31 through small gaps sequentially. The twelve salient poles 31a of the stator 31 have twelve windings 33: *U-, V-*, and *W*-phase windings wound thereon in series in the illustrated manner. Specifically, the stator 31 has four winding sets each made up of the *U-, V-,* and *W*-phase windings.

The angular width θ 1 of each of the salient poles 31a of the stator 31 (i.e., an angular distance between radially inside corners of each of the salient poles 31a) and the angular width θ 2 of a recess formed between adjacent two of the salient poles 31a (i.e., an angular distance between the opposed corners of adjacent two of the salient poles 31a) have a relation of θ 1 = θ 2. In the case where the total number of the salient poles 31a is twelve (12), each of the angular widths θ1 and θ2 is 15° which is given by

$$\theta 1 = \theta 2 = 360^\circ \, / \, (12 \times 2) = 15^\circ$$

The angular width θ 3 of each of the salient poles 32a of the rotor 32 (i.e., an angular distance between radially outside corners of each of the salient poles 32a) and the angular width θ 4 of a recess formed between adjacent two of the salient poles 32a (i.e., an angular distance between the opposed corners of adjacent two of the salient poles 32a) have a relation of θ 3 = θ 4. In the case where the total number of the salient poles 32a is eight (8), each of the angular widths θ 3 and θ 4 is 22.5° which is given by

$$\theta 3 = \theta 4 = 360^\circ \, / \, (8 \times 2) = 22.5^\circ$$

The number of the salient poles 31a of the stator 31 or the salient poles 32a of the rotor 32 may be changed as needed.

The twelve windings 33 are wound around the salient poles 31a of the stator 31 in the order of, as clearly illustrated in Fig. 3, *V*-phase, *W*-phase, *U*-phase, *V*-phase, *W*-phase, *U*-phase, *V*-phase, *W*-phase, *U*-phase, *V*-phase, *W*-phase, and *U*-phase.

The *V*-phase, *W*-phase, and *U*-phase windings 33 are, as clearly shown in Fig. 4, *Y*-connected. The four *V*-phase windings 33 are connected in parallel. The same applies to the *W*-phase windings 33 and the *U*-phase windings 33. The windings 33 of each phase may alternatively be connected in series. In the following discussion, a group of the *U*-phase windings 33, a group of the *V*-phase windings 33, and a group of the *W*-phase windings 33 will also be referred to as a *U*-phase winding group 33, a *V*-phase winding group 33, and a *W*-phase winding group 33, respectively.

The synchronous motor 13 is, as illustrated in Fig. 4, supplied with electric power from a battery 34 installed in the vehicle and controlled in operation by a motor driver 35. The motor driver 35 is of a unipolar driving circuit structure which has a switching element 36 made of a MOS-FET for each phase. The motor driver 35 may alternatively be of a bipolar driving circuit structure which has two MOS-FET for each phase. The neutral point of the *Y*-connected windings 33 is joined to a positive terminal of the battery 34. Ends of the windings 33 are joined to the switching elements 36 of the motor driver 35, respectively. The on/off operations of the switching elements 35 are controlled by a CPU 38 installed in the range shift controller 37.

The synchronous motor 13, as illustrated in Fig. 2, has also installed thereon an encoder 30 working as an angular position sensor to measure an angular position of the rotor 32 of the synchronous motor 13. The encoder 31 is implemented by, for example, a magnetic rotary encoder which is designed to output A-, *B*-, and *Z*-phase pulse signals, in sequence, in synchronization with rotation of the rotor 32 of the synchronous motor 13 to the range shift controller 37. The CPU 38 of the range shift controller 37 counts both a leading and a trailing edge (also called a rising and a falling edge) of each of the A- and *B*-phase signals and uses such a count value (will also be referred to as an encoder count value below) to select one of the phases of the synchronous motor 13 to be energized in a scheduled sequence through the motor driver 35, thereby achieving rotation of the synchronous motor 13.

The CPU 38 samples an input sequence of the A- and *B*-phase signals to determine a rotational direction of the rotor 32 of the synchronous motor 13 and increments the encoder count value when the synchronous motor 13 is rotating in a normal direction in which the gear range of the automatic transmission 12 is shifted from the P to D range or decrements the encoder count value when the synchronous motor 13 is rotating in a reverse direction in which the gear range of the automatic transmission 12 is shifted from the D to P range. This establishes a matching between the encoder count value and the angular position of the synchronous motor 13 regardless of the rotational direction of the synchronous motor 13. The CPU 38 also samples the encoder count value to determine the angular position of the synchronous motor 13 and energizes the windings 32 of one or two of the phases of the synchronous motor 13 corresponding to the determined angular position to activate the synchronous motor 13. Note that the Z-phase signal outputted by the encoder 31 is used in the CPU 38 to detect a reference angular position of the rotor 32 of the synchronous motor 13.

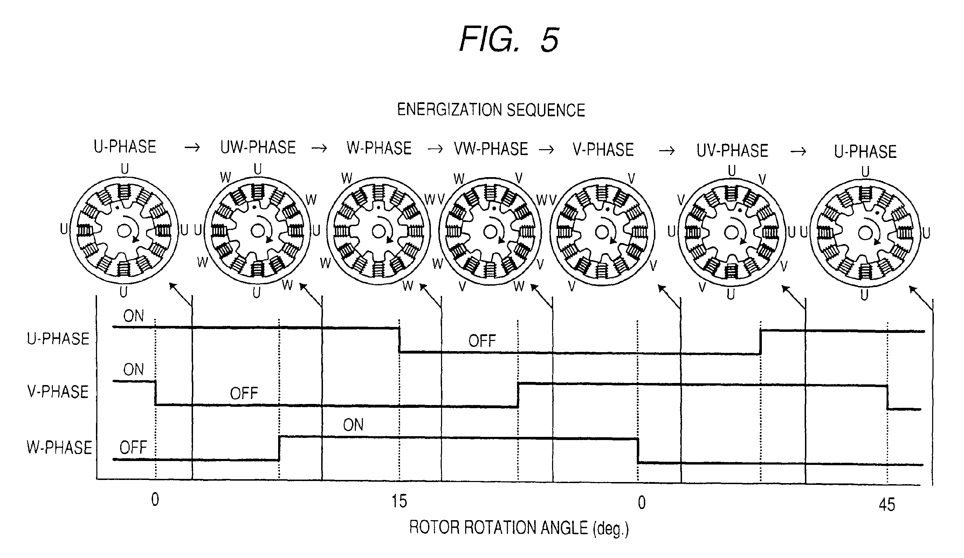

When a vehicle operator has shifted the gear shift lever to one of a parking (*P*), a reverse (*R*), a neutral (*N*), and a drive (*D*) position which correspond to the P, R, *N,* and D ranges of the automatic transmission 12, respectively, the range shift controller 37 determines a target angular position of the synchronous motor 13 (i.e., a target value of the encoder count value) and starts to electrically energize or rotate the synchronous motor 13 in a feedback control mode until the encoder count value reaches the target one. Specifically, the range shift controller 37 switches between the phases of the synchronous motor 13 to be energized in a sequence of the *U*-phase, *UV*-phases, *V*-phase, *VW*-phases, *W*-phase, and *UW*-phases or vice versa in synchronization with outputting of the *A*-phase and *B*-phase signals from the encoder 30. Fig. 5 demonstrates the sequence in which the *U*-phase, *V*-phase, and *W*-phase winding groups 33 of the synchronous motor 13 are energized selectively to rotate the synchronous motor 13 in the reverse direction (i.e., the D to P range). The synchronous motor 13 is so designed as to establish a phase switch every 7.5° rotation of the rotor 32.

Once the synchronous motor 13 starts rotating, the inertia force acting on the rotor 32 makes it continue to rotate even if the winding(s) 33 of one of the *U*-, *V*-, and *W*-phases contains a broken wire, thus enabling the synchronous motor 13 to be operated in the feedback control mode. However, when it is required to start the synchronous motor 13, and it is impossible to energize a first one of the *U*-, *V*-, and *W*-phase winding groups 33, the synchronous motor 13 will fail to be rotated.

In order to avoid the above problem, the range shift controller 37 is so designed that when the fact that a first one of the *U*-, *V*-, and *W*-phase winding groups 33 is failing to be energized upon start of the synchronous motor 13 has been found, the CPU 38 performs a reverse rotation control strategy to reverse the sequence in which the *U*-, *V*-, and *W*-phase winding groups 33 are to be energized to rotate the synchronous motor 13 slightly in a direction reverse to that required and then returns such a sequence back to the required one to rotate the synchronous motor 13 in the correct or required direction. Specifically, the phases to be energized first upon start of the synchronous motor 13 are, as described above, usually different between a required direction and an opposite direction. Therefore, when it is impossible to energize a first one of the *U*-, *V*-,* and *W*-phase winding groups 33 to start the synchronous motor 13, the rotation of the synchronous motor 13 may be achieved by reversing it slightly to change one of the *U*-, *V*-, and *W*-phase winding groups 33 to be energized first to rotate the synchronous motor 13 in the required direction to another.

In order to early find a failure in energizing one of the *U*-, *V*-, and *W*-phase winding groups 33 to start the synchronous motor 13, the CPU 38 of the range shift controller 37 is designed to monitor voltages V$u$, V$v$, and *V*$w$ appearing at terminals of the switching elements 36 of the motor driver 35 which lead to the windings 33 and voltage Vb developed across the battery 34 at all times and determine whether the synchronous motor 15 is failing in energizing the windings 33 first to start the synchronous motor 15 or not in the following manner.

For instance, when the *U*-phase switching element 36 is operating properly to energize the *U*-phase windings 33 normally, turning on of the *U*-phase switching element 36 will cause the voltage Vu appearing between the *U*-phase switching element 36 and the windings 33 to be approximately zero (0V). Turning off of the *U*-phase switching element 36 will cause the voltage Vu to be substantially the same as the voltage Vb of the battery 34. When the *U*-phase switching element 36 is malfunctioning and difficult to turn on, and the CPU 38 has outputted an on-signal to the *U*-phase switching element 36, it will cause the voltage Vu to be substantially the same as the voltage Vb of the battery 34. When having found such an event, the CPU 38 determines that the motor driver 35 is failing in turning on the *U*-phase switching element 36. When the *U*-phase windings 33 or a power supply line thereof is broken, so that the *U*-phase windings 33 are failing to be energized, turning off of the *U*-phase switching element 36 will cause the voltage Vu to be approximately zero (0V). When having found such an event, the CPU 38 determines that the *U*-phase windings 33 are failing to be energized properly. Specifically, the determination of whether some of the windings 33 to be energized first to start the synchronous motor 13 are failing to be energized properly or not may be made by monitoring the on-off state of a corresponding one of the switching elements 36 and a corresponding one of the voltages Vu, *Vv,* and *Vw.*

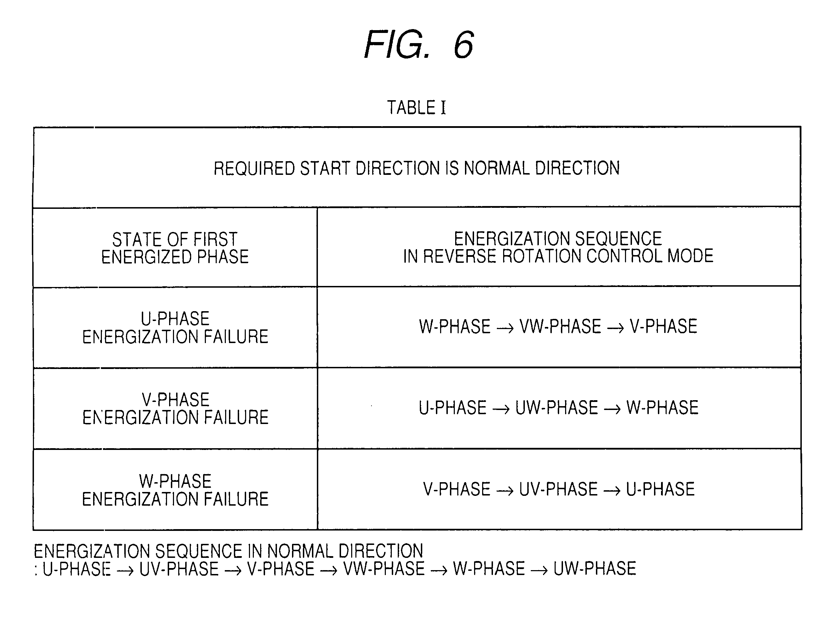

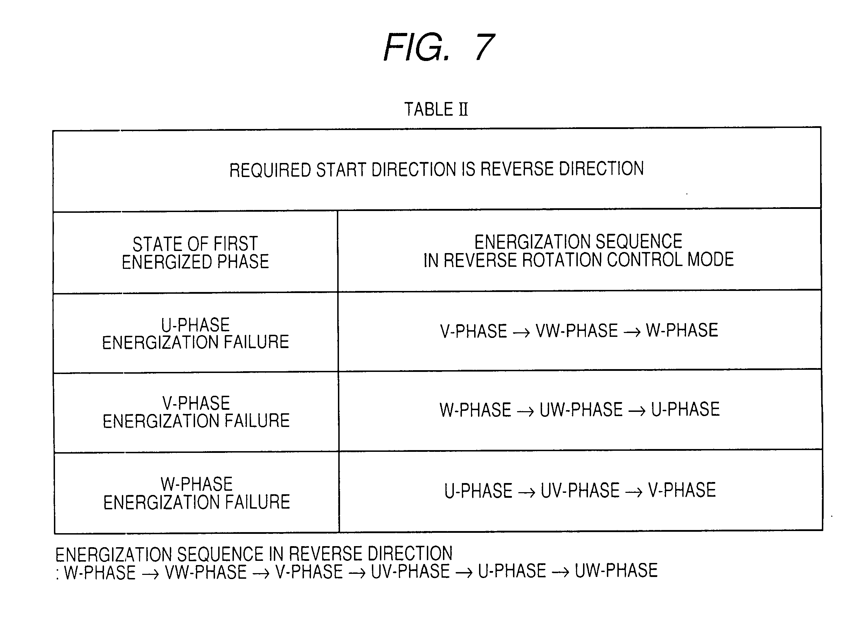

When having detected the fact that at least one of the *U*-, *V*-, and *W*-phase winding groups 33 is failing to be energized first to start the synchronous motor 13, the CPU 38 of the range shift controller 37, as described above, performs the reverse rotation control strategy to reverse the sequence, as demonstrated in table I and II of Figs. 6 and 7, in which the *U*-, *V*-, and *W*-phase winding groups 33 are to be energized to rotate the synchronous motor 13 slightly in a direction reverse to that required.

For instance, when an initially required direction in which the synchronous motor 13 is to be rotated is the normal direction, as demonstrated in Fig. 6, that is, when the windings 32 are to be energized selectively in the sequence of the *U*-phase, the *UV*-phases, the *V*-phase, the *VW*-phases, the *W*-phase, and the *UW*-phases, and it is impossible to energize the *U*-phase winding group 33 which is to be energized first to start the synchronous motor 13, the CPU 38 of the range shift controller 37 works to energize the windings 32 in the sequence of the *W*-phase, the *VW*-phases, and *V*-phase. Alternatively, when it is impossible to energize the *V*-phase winding group 33 which is to be energized first to start the synchronous motor 13, the CPU 38 works to energize the windings 32 in the sequence of the *U*-phase, the *UW*-phases, and *W*-phase. When it is impossible to energize the *W*-phase winding group 33 which is to be energized first to start the synchronous motor 13, the CPU 38 works to energize the windings 32 in the sequence of the *V*-phase, the *UV*-phases, and *U*-phase. The switching between the windings 33 to be energized is made at an interval of, for example, 100msec. through a timer installed in the CPU 38.

Alternatively, when an initially required direction in which the synchronous motor 13 is to be rotated is the reverse direction, as demonstrated in Fig. 7, that is, when the windings 32 are to be energized selectively in the sequence of the *W*-phase, the *VW*-phases, the *V*-phase, the *UV*-phases, the *U*-phase, and the *UW*-phases, and it is impossible to energize the *U*-phase winding group 33 which is to be energized first to start the synchronous motor 13, the CPU 38 of the range shift controller 37 works to energize the windings 32 in the sequence of the *V*-phase, the *VW*-phases, and *W*-phase. When it is impossible to energize the *V*-phase winding group 33 which is to be energized first to start the synchronous motor 13, the CPU 38 works to energize the windings 32 in the sequence of the *W*-phase, the *UW*-phases, and *U*-phase. When it is impossible to energize the *W*-phase winding group 33 which is to be energized first to start the synchronous motor 13, the CPU 38 works to energize the windings 32 in the sequence of the *U*-phase, the *UV*-phases, and *V*-phase. The switching between the windings 33 to be energized is made at an interval of, for example, 100msec through a timer installed in the CPU 38.

If one of the *U*-phase, *V*-phase, and *W*-phase winding groups 33 which is to be energized last upon completion of the reverse rotation control strategy is failing to be energized, it will cause the rotor 32 to overrun without stopping at a required position due to the inertia thereof. This results in an undesirable shift between the angular position of one of the *U*-phase, *V*-phase, and *W*-phase winding groups 33 which is to be energized first to restart the synchronous motor 13 and the angular position of the rotor 32 of the synchronous motor 13, which may lead to a difficulty in restart the synchronous motor 13.

In order to eliminate the above drawback, the CPU 38 is, as can be seen from Figs. 6 and 7, designed to energize only ones of the *U*-phase, *V*-phase, and *W*-phase winding groups 33 other than that, as determined to be failing , during the reverse rotation control strategy and complete the reverse rotation control strategy upon energization of one of the *U*-phase, *V*-phase, and *W*-phase winding groups 33 which is other than that, as determined to be failing.

Too short a period of time for which one of the *U*-phase, *V*-phase, and *W*-phase winding groups 33 is energized last in the reverse rotation control strategy may cause the rotor 32 to overrun without stopping a proper position due to the inertia thereof. The CPU 38 is, therefore, designed to set a period of time, for which one of the *U*-phase, *V*-phase, and *W*-phase winding groups 33 is to be energized at least last, longer than that (e.g., 100ms) required to hold the rotor 32 at a required position upon completion of the reverse rotation control strategy, thereby ensuring the stopping of the rotor 32 at the required position.

A proper length of time one of the *U*-phase, *V*-phase, and *W*-phase winding groups 33 is to be energized last is preferably determined as a fixed value enough to stop the rotor 32 at a proper position and depends upon characteristics of the synchronous motor 13.

The stopping of the synchronous motor 13 upon completion of the reverse rotation control strategy may be checked by monitoring a pulse signal outputted from the encoder 30, but it depends upon the resolution of the encoder 30, thus resulting in need for waiting for a while after the pulse signal from the encoder 30 stops changing in level. It is, therefore, advisable that the length of time one of the *U*-phase, *V*-phase, and *W*-phase winding groups 33 is to be energized last be set long enough to eliminate the need for checking the stopping of the synchronous motor 13 using the pulse signal from the encoder 30.

The length of time each of the *U*-phase, *V*-phase, and *W*-phase winding groups 33 is energized during the reverse rotation control strategy is, as described above, controlled by the timer. When a normal start control mode where it is possible to energize all the *U*-phase, *V*-phase, and *W*-phase winding groups 33 properly is entered, the CPU 38 re-determines the *U*-phase, *V*-phase, or *W*-phase winding groups 33 to be energized based on interruption of the pulse signal outputted from the encoder 30 and controls the energization of the *U*-phase, *V*-phase, and *W*-phase winding groups 33 in a feedback control mode. Specifically, the reverse rotation control mode is similar to the normal start control mode in one-to-two phase energization, but different in controlling the time when one of the *U*-phase, *V*-phase, and *W*-phase winding groups 33 to be energized next is switched to another using the timer.

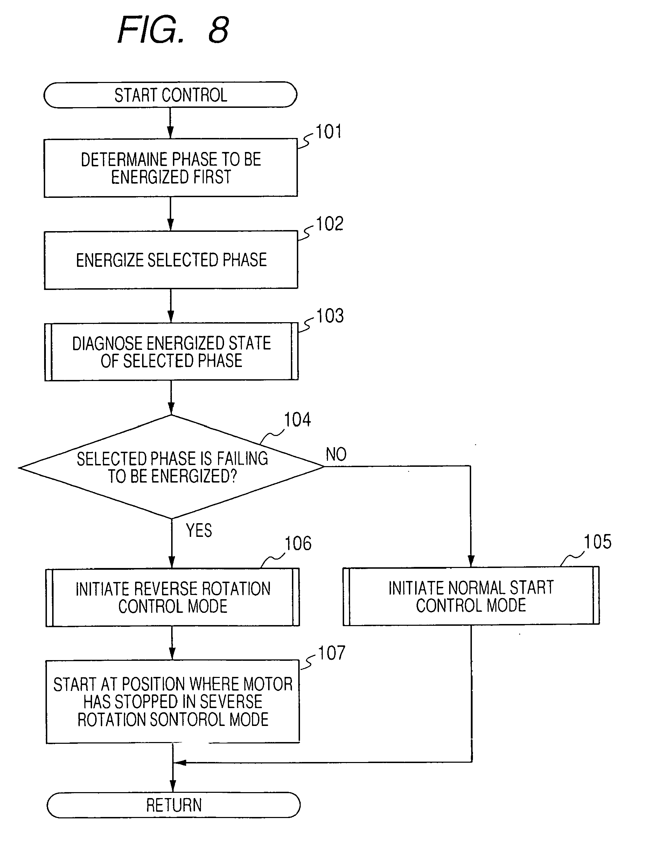

Figs. 8 to 10 are flowcharts of logical steps or programs to be executed by the CPU 38 of the range shift controller 37 to control the start of the synchronous motor 13.

When it is required to start the synchronous motor 13, the routine enters the program and proceeds to step 101 wherein it is determined which of the *U*-phase, *W*-phase, and *W*-phase winding groups 33 is to be energized first. As an example, the *U*-phase winding groups 33 will be referred to as being to be energized first.

The routine proceeds to step 102 wherein one of the switching elements 36 leading to one of the *U*-phase, *W*-phase, and *W*-phase winding groups 33, as determined to be energized first in step 101, that is, the switching element 36 leading to the *U*-phase winding group 33 is turned on to supply the current to the *U*-phase winding group 33.

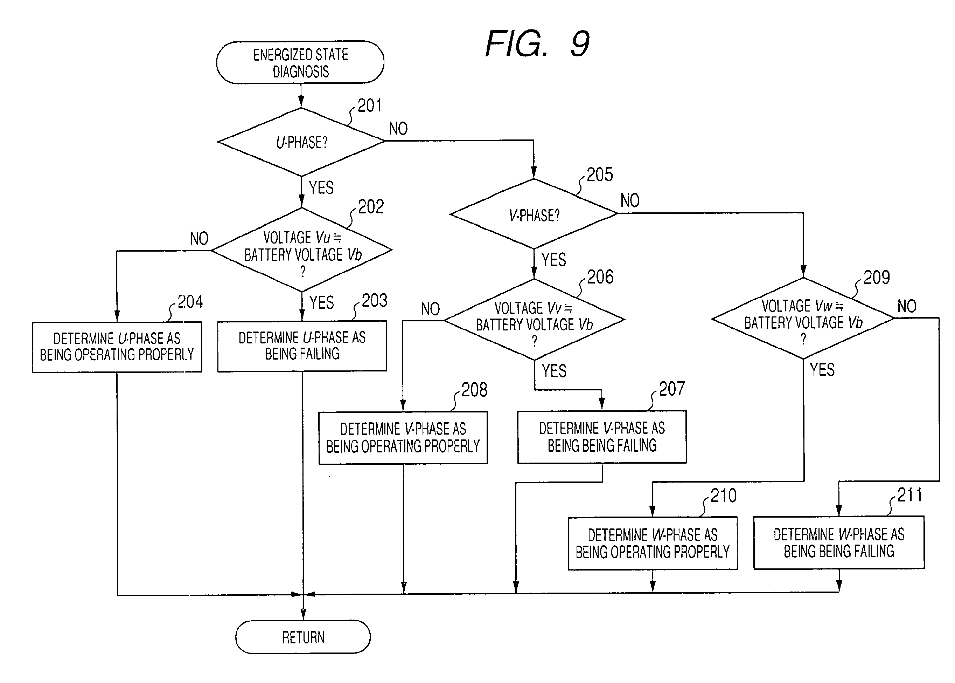

The routine proceeds to step 103 and enters an energized state diagnosing program, as illustrated in Fig. 9, to diagnose the *U*-phase winding group 33.

The routine proceeds to step 104 wherein the results of diagnosis in step 103 are analyzed to determine whether the *U*-phase winding group 33 is failing to be energized or not. If a NO answer is obtained meaning that the *U*-phase winding group 33 is being energized properly, then the routine proceeds to step 105 wherein the CPU 38 initiates the normal start control mode to switch the *U*-phase, the *V*-phase, and the *W*-phase winding groups 33 between the on- and the off-states selectively in a sequence to rotate the synchronous motor 13 in a required direction using the count value of the encoder 30.

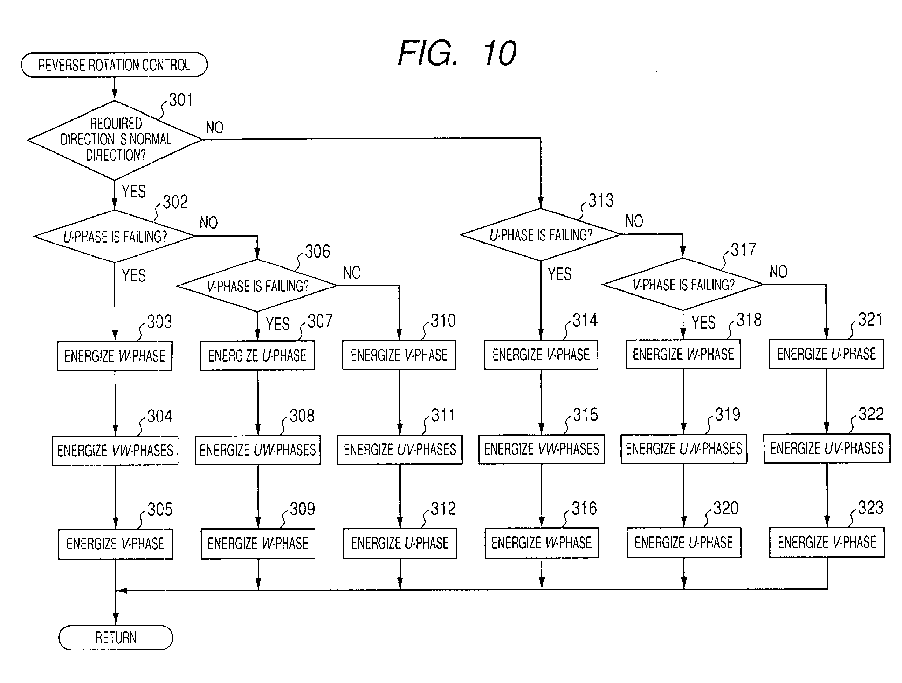

Alternatively, if a YES answer is obtained meaning that the *U*-phase winding group 33 is failing to be energized, then the routine proceeds to step 106 wherein the CPU 38 initiates the reverse rotation control mode, as illustrated in Fig. 10, to switch the *U*-phase, the *V*-phase, and the *W*-phase winding groups 33 between the on- and the off-states selectively in a sequence reverse to that in the normal start control mode to rotate the synchronous motor 13 in a direction reverse to a required direction slightly. The routine then proceeds to step 107 wherein after completion of the reverse rotation control mode, the CPU 38 starts to rotate the synchronous motor 13 in the required direction from the position where the synchronous motor 13 has stopped upon completion of the reverse rotation control mode.

The operation in step 107 is substantially the same as in step 105. Specifically, the CPU 38 rotates the synchronous motor 13 in the feedback control mode using the pulse signal outputted in sequence from the encoder 30. The CPU 38 outputs the on-signal to the switching element 36 leading to one of the *U*-phase, the *V*-phase, and the *W*-phase winding groups 33 which is impossible to energize, but however, the inertia energy stored in the rotor 32 since the start of the normal start control mode serves to keep the synchronous motor 13 rotating as long as the inertia energy is greater than the resistance to which the rotor 32 is subjected to rotate.

After completion of the normal start control mode, the CPU 38 controls the rotation of the synchronous motor 13 in a feedback control mode (not shown) and stops it when the count value of the encoder 30 reaches a target value corresponding to one of the P, *R, N,* and D ranges of the automatic transmission 12 which is selected manually by the gear shift lever.

The operation in step 103 of Fig. 8 will be described below in detail with reference to Fig. 9.

Upon entry in step 103, the routine proceeds to step 201 wherein it is determined whether one of the *U*-phase, *W*-phase, and *W*-phase winding groups 33 which is determined in step 101 to be energized first is the *U*-phase winding group 3 or not. If a YES answer is obtained, then the routine proceeds to step 202 wherein it is determined whether the voltage Vu developed between the *U*-phase winding group 33 and a corresponding one of the switching elements 36 is substantially equal to the battery voltage Vb or not. If a YES answer is obtained, then the routine proceeds to step 203 wherein it is determined that it is impossible to energize the *U*-phase winding group 33. Alternatively, if a NO answer is obtained meaning that the voltage *Vu* is substantially equal to zero (OV), then the routine proceeds to step 204 wherein the *U*-phase winding group 33 is being energized properly.

If a NO answer is obtained in step 201 meaning that the one of the *U*-phase, *W*-phase, and *W*-phase winding groups 33 which is determined in step 101 to be energized first is not the *U*-phase winding group 33, then the routine proceeds to step 205 wherein it is determined whether the one of the *U*-phase, *W*-phase, and *W*-phase winding groups 33 which is determined in step 101 to be energized first is the *V*-phase winding group 33 or not. If a YES answer is obtained, then the routine proceeds to step 206 wherein it is determined whether the voltage *Vv* developed between the *V*-phase winding group 33 and a corresponding one of the switching elements 36 is substantially equal to the battery voltage Vb or not. If a YES answer is obtained, then the routine proceeds to step 207 wherein it is determined that it is impossible to energize the *V*-phase winding group 33. Alternatively, if a NO answer is obtained meaning that the voltage Vv is substantially equal to zero (OV), then the routine proceeds to step 208 wherein the *V*-phase winding group 33 is being energized properly.

If a NO answer is obtained in step 205 meaning that the one of the *U*-phase, *W*-phase, and *W*-phase winding groups 33 which is determined in step 101 to be energized first is not the *V*-phase winding group 33, then the routine proceeds to step 209 wherein it is determined whether the voltage Vw developed between the *W*-phase winding group 33 and a corresponding one of the switching elements 36 is substantially equal to the battery voltage Vb or not. If a YES answer is obtained, then the routine proceeds to step 210 wherein it is determined that it is impossible to energize the *W*-phase winding group 33. Alternatively, if a NO answer is obtained meaning that the voltage Vw is substantially equal to zero (OV), then the routine proceeds to step 211 wherein the *W*-phase winding group 33 is being energized properly.

The operation in step 106 of Fig. 8 will be described below in detail with reference to Fig. 10.

Upon entry in step 106, the routine proceeds to step 301 wherein it is determined whether a required direction in which the synchronous motor 13 is to be rotated is the normal direction or not. If a YES answer is obtained, then the routine proceeds to step 302 wherein it is determined whether a failure is occurring in energizing the *U*-phase winding group 33 or not based on the diagnosis made in the program of Fig. 9.

If a YES answer is obtained in step 302 meaning that the failure is occurring in energizing the *U*-phase winding group 33, then the routine proceeds to step 303 wherein the *W*-phase winding group 33 is energized for a predetermined period of time (e.g., 100msec.) using the timer. Subsequently, the routine proceeds to step 304 wherein the *W*-phase winding group 33 and the *V*-phase winding group 33 are energized for a predetermined period of time (e.g., 100msec.) using the timer. Subsequently, the routine proceeds to step 305 wherein the *V*-phase winding group 33 is energized for a predetermined period of time (e.g., 100msec.) using the timer to complete the reverse rotation control mode.

If a NO answer is obtained in step 302 meaning that it is possible to energize the *U*-phase winding group 33 properly, then the routine proceeds to step 306 wherein it is determined whether a failure is occurring in energizing the *V*-phase winding group 33 or not based on the diagnosis made in the program of Fig. 9. If a YES answer is obtained meaning that the failure is occurring in energizing the *V*-phase winding group 33, then the routine proceeds to step 307 wherein the *U*-phase winding group 33 is energized for a predetermined period of time (e.g., 100msec.) using the timer. Subsequently, the routine proceeds to step 308 wherein the *U*-phase winding group 33 and the *W*-phase winding group 33 are energized for a predetermined period of time (e.g., 100msec.) using the timer. Subsequently, the routine proceeds to step 309 wherein the W-phase winding group 33 is energized for a predetermined period of time (e.g., 100msec.) using the timer to complete the reverse rotation control mode.

If a NO answer is obtained in step 306 meaning that a failure is occurring in energizing the *W*-phase winding group 33, the routine proceeds to step 310 wherein the *V*-phase winding group 33 is energized for a predetermined period of time (e.g., 100msec.) using the timer. Subsequently, the routine proceeds to step 311 wherein the *U*-phase winding group 33 and the *V*-phase winding group 33 are energized for a predetermined period of time (e.g., 100msec.) using the timer. Subsequently, the routine proceeds to step 312 wherein the *U*-phase winding group 33 is energized for a predetermined period of time (e.g., 100msec.) using the timer to complete the reverse rotation control mode.

If a NO answer obtained in step 301 meaning that the required direction is the reverse direction, then the routine proceeds to step 313 wherein it is determined whether a failure is occurring in energizing the *U*-phase winding group 33 or not based on the diagnosis made in the program of Fig. 9.

If a YES answer is obtained in step 313 meaning that the failure is occurring in energizing the *U*-phase winding group 33, then the routine proceeds to step 314 wherein the *V*-phase winding group 33 is energized for a predetermined period of time (e.g., 100msec.) using the timer. Subsequently, the routine proceeds to step 315 wherein the *V*-phase winding group 33 and the *W*-phase winding group 33 are energized for a predetermined period of time (e.g., 100msec.) using the timer. Subsequently, the routine proceeds to step 316 wherein the *W*-phase winding group 33 is energized for a predetermined period of time (e.g., 100msec.) using the timer to complete the reverse rotation control mode.

If a NO answer is obtained in step 313 meaning that it is possible to energize the *U*-phase winding group 33 properly, then the routine proceeds to step 317 wherein it is determined whether a failure is occurring in energizing the *V*-phase winding group 33 or not based on the diagnosis made in the program of Fig. 9. If a YES answer is obtained meaning that the failure is occurring in energizing the *V*-phase winding group 33, then the routine proceeds to step 318 wherein the *W*-phase winding group 33 is energized for a predetermined period of time (e.g., 100msec.) using the timer. Subsequently, the routine proceeds to step 319 wherein the *U*-phase winding group 33 and the *W*-phase winding group 33 are energized for a predetermined period of time (e.g., 100msec.) using the timer. Subsequently, the routine proceeds to step 320 wherein the *U*-phase winding group 33 is energized for a predetermined period of time (e.g., 100msec.) using the timer to complete the reverse rotation control mode.

If a NO answer is obtained in step 317 meaning that a failure is occurring in energizing the *W*-phase winding group 33, the routine proceeds to step 321 wherein the *U*-phase winding group 33 is energized for a predetermined period of time (e.g., 100msec.) using the timer. Subsequently, the routine proceeds to step 322 wherein the *U*-phase winding group 33 and the *V*-phase winding group 33 are energized for a predetermined period of time (e.g., 100msec.) using the timer. Subsequently, the routine proceeds to step 323 wherein the *V*-phase winding group 33 is energized for a predetermined period of time (e.g., 100msec.) using the timer to complete the reverse rotation control mode.

The periods of time for which the *U*-phase, the *V*-phase, and the *W*-phase are energized in steps 303 to 323 are the same, but however, they may be determined to be different from each other. For instance, the periods of time for which a first and a last one of the *U*-phase, the *V*-phase, and the *W*-phase winding groups 33 are to be energized in the reverse rotation control mode may be set longer than that for which the middle one is to be energized. Alternatively, the period of time for which the last one of the *U*-phase, the *V*-phase, and the *W*-phase winding groups 33 is to be energized may be set longer than those for which the other two are to be energized.

While the present invention has been disclosed in terms of the preferred embodiments in order to facilitate better understanding thereof, it should be appreciated that the invention can be embodied in various ways without departing from the principle of the invention. Therefore, the invention should be understood to include all possible embodiments and modifications to the shown embodiments which can be embodied without departing from the principle of the invention as set forth in the appended claims.

For example, the CPU 38 may be designed to selectively energize only one of the *U*-phase, the *V*-phase, and the *W*-phase winding groups 33 in sequence or two of them simultaneously in the reverse rotation control mode.

The encoder 30 is of a magnetic type, but may be of an optical or a brush type.

The synchronous motor 13 may not be the *SR* motor and can be of any type of synchronous motor in which the angular position of a rotor may be monitored by the CPU 38 using the count value of the encoder 30 to switch phase windings between on- and off-states.

The invention may be used with a variety of devices other than the range shift controller 37 which are equipped with a power source made of a synchronous motor such as the SR motor.

**Claims**

1. A synchronous motor controller comprising:

   an angular position sensor which measures an angular position of a rotor of a synchronous motor equipped with phase windings and outputs a signal indicative thereof; and
   a controller which works to operate the synchronous motor selectively in a normal rotation control mode and a reverse rotation control mode, in the normal rotation control mode, said controller monitoring the signal outputted from said angular position sensor and switching phase windings of the synchronous motor selectively in a first scheduled sequence between an energized state and a deenergized state to rotate the synchronous motor in a required direction until an angular position of the synchronous motor, as measured by said angular position sensor, reaches a required position, said controller also working to diagnose whether a failure is occurring in energizing one of the phase windings of the synchronous motor which is to be energized first when it is required to start the synchronous motor, when the failure is found as being occurring, said controller entering the reverse rotation control mode temporarily to switch the phase windings of the synchronous motor selectively between the energized state and the deenergized state in a second scheduled sequence reverse to the first scheduled sequence to rotate the synchronous motor in a direction reverse to the required direction and then entering the normal rotation control mode to bring the angular position of the synchronous motor into agreement with the required position.

2. A synchronous motor controller as set forth in claim 1, wherein after entering the reverse rotation control mode, said controller selectively energizes the phase windings other than that found as being failing to be energized and last completes energization of one of the phase windings which is other than that found as being failing to be energized to complete the reverse rotation control mode.

3. A synchronous motor controller as set forth in claim 2, wherein a period of time for which the one of the phase windings is energized last upon completion of the reverse rotation control mode has a length required to hold the rotor at a given stop position.

4. A synchronous motor controller as set forth in claim 1, wherein the synchronous motor is used to drive a range shifting mechanism designed to shift gear ranges of an automotive automatic transmission from one to another.

# FIG. 1

FIG. 2

# FIG. 3

$$\theta 1 = \theta 2 = \frac{360°}{12 \times 2} = 15°$$

$$\theta 3 = \theta 4 = \frac{360°}{8 \times 2} = 22.5°$$

FIG. 4

# FIG. 5

ENERGIZATION SEQUENCE

U-PHASE → UW-PHASE → W-PHASE → VW-PHASE → V-PHASE → UV-PHASE → U-PHASE

ROTOR ROTATION ANGLE (deg.)

EP 1 868 287 A2

# FIG. 6

TABLE I

| REQUIRED START DIRECTION IS NORMAL DIRECTION | |
|---|---|
| STATE OF FIRST ENERGIZED PHASE | ENERGIZATION SEQUENCE IN REVERSE ROTATION CONTROL MODE |
| U-PHASE ENERGIZATION FAILURE | W-PHASE → VW-PHASE → V-PHASE |
| V-PHASE ENERGIZATION FAILURE | U-PHASE → UW-PHASE → W-PHASE |
| W-PHASE ENERGIZATION FAILURE | V-PHASE → UV-PHASE → U-PHASE |

ENERGIZATION SEQUENCE IN NORMAL DIRECTION
: U-PHASE → UV-PHASE → V-PHASE → VW-PHASE → W-PHASE → UW-PHASE

EP 1 868 287 A2

## FIG. 7

TABLE II

| REQUIRED START DIRECTION IS REVERSE DIRECTION | |
|---|---|
| STATE OF FIRST ENERGIZED PHASE | ENERGIZATION SEQUENCE IN REVERSE ROTATION CONTROL MODE |
| U-PHASE ENERGIZATION FAILURE | V-PHASE → VW-PHASE → W-PHASE |
| V-PHASE ENERGIZATION FAILURE | W-PHASE → UW-PHASE → U-PHASE |
| W-PHASE ENERGIZATION FAILURE | U-PHASE → UV-PHASE → V-PHASE |

ENERGIZATION SEQUENCE IN REVERSE DIRECTION
: W-PHASE → VW-PHASE → V-PHASE → UV-PHASE → U-PHASE → UW-PHASE

EP 1 868 287 A2

# FIG. 8

```
      ┌──────────────────────┐
      │    START CONTROL     │
      └──────────┬───────────┘
                 │
                 ▼                    ⌐101
      ┌──────────────────────┐
      │  DETERMAINE PHASE TO BE │
      │    ENERGIZED FIRST   │
      └──────────┬───────────┘
                 │
                 ▼                    ⌐102
      ┌──────────────────────┐
      │  ENERGIZE SELECTED PHASE │
      └──────────┬───────────┘
                 │
                 ▼                    ⌐103
      ┌──────────────────────┐
      │  DIAGNOSE ENERGIZED STATE │
      │    OF SELECTED PHASE │
      └──────────┬───────────┘
                 │
                 ▼                    104
          ◇─────────────────◇        NO
          ╱  SELECTED PHASE IS FAILING ╲───────────────┐
          ╲    TO BE ENERGIZED?      ╱                 │
          ◇─────────────────◇                          │
                 │ YES                                  │
                 ▼                  106                 ▼            105
      ┌──────────────────────┐          ┌──────────────────────┐
      │  INITIATE REVERSE ROTATION │      │  INITIATE NORMAL START │
      │    CONTROL MODE      │          │    CONTROL MODE      │
      └──────────┬───────────┘          └──────────┬───────────┘
                 │                                  │
                 ▼                  ⌐107            │
      ┌──────────────────────┐                      │
      │  START AT POSITION WHERE MOTOR │            │
      │  HAS STOPPED IN SEVERSE │                   │
      │  ROTATION SONTOROL MODE │                   │
      └──────────┬───────────┘                      │
                 │◄─────────────────────────────────┘
                 ▼
      ┌──────────────────────┐
      │       RETURN         │
      └──────────────────────┘
```

# FIG. 9

ENERGIZED STATE
DIAGNOSIS

201
U-PHASE? — NO

YES

202
VOLTAGE $Vu \fallingdotseq$
BATTERY VOLTAGE $Vb$
?

NO — YES

204
DETERMINE U-PHASE AS
BEING OPERATING PROPERLY

203
DETERMINE U-PHASE AS
BEING FAILING

205
V-PHASE? — NO

YES

206
VOLTAGE $Vv \fallingdotseq$
BATTERY VOLTAGE $Vb$
?

NO — YES

208
DETERMINE V-PHASE AS
BEING OPERATING PROPERLY

207
DETERMINE V-PHASE AS
BEING BEING FAILING

209
VOLTAGE $Vw \fallingdotseq$
BATTERY VOLTAGE $Vb$
? — NO

YES

210
DETERMINE W-PHASE AS
BEING OPERATING PROPERLY

211
DETERMINE W-PHASE AS
BEING BEING FAILING

RETURN

EP 1 868 287 A2

FIG. 10

EP 1 868 287 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006161896 A

- JP 2004023890 A